# FASCICULE DE BREVET EUROPEEN

(11) **EP 4 200 127 B1**
(45) Date de publication et mention de la délivrance du brevet: **13.08.2025**
(21) Numéro de dépôt: 21769766.3
(22) Date de dépôt: 16.08.2021
(51) Int. Cl.: B29D 30/06

(54) **MOULE DE CUISSON POUR PNEUMATIQUE COMPORTANT DES MOYENS DE DÉCOUPAGE D'UNE BAVURE DE GOMME**
VULKANISIERFORM FÜR EINEN REIFEN MIT MITTELN ZUM SCHNEIDEN EINER GUMMIFORMNAHT
CURING MOULD FOR A TYRE, COMPRISING MEANS FOR CUTTING A RUBBER MOULD SEAM

(30) Priorité: 19.08.2020 FR 2008560
(43) Date de publication de la demande: 28.06.2023
(73) Titulaire: COMPAGNIE GENERALE DES ETABLISSEMENTS MICHELIN, 63040 Clermont-Ferrand (FR)
(72) Inventeur: BARDIN, Damien, 63040 Clermont-Ferrand CEDEX 9 (FR)
(74) Mandataire: M.F.P. Michelin
(86) Numéro de dépôt international: PCT/FR2021/051468
(87) Numéro de publication internationale: WO 2022/038328

(56) Documents cités:
- EP-A1- 2 813 354
- EP-A1- 3 263 307
- EP-A2- 0 451 832
- WO-A1-2017/221283
- DE-A1- 102018 213 083
- DE-A1- 19 506 697
- FR-A1- 3 024 059
- JP-A- H03 279 006
- JP-A- H10 264 271
- KR-Y1- 200 408 355
- US-A1- 2007 284 783
- US-B1- 6 318 983

## Description

L'invention se situe dans le domaine de la fabrication des pneumatiques et concerne plus particulièrement un moule de cuisson pour pneumatique comportant des moyens de découpage d'une bavure de gomme.

La fabrication d'un pneumatique comprend une étape de cuisson pendant laquelle une ébauche de pneumatique est moulée et vulcanisée pour donner au pneumatique ses caractéristiques et son aspect final. La cuisson d'un pneumatique s'effectue dans un moule de cuisson. Le moule comprend plusieurs éléments de moulage qui forment, en position de fermeture du moule, une surface interne de moulage correspondant en négatif à la surface externe du pneumatique. En particulier, le moule comprend plusieurs secteurs répartis circonférentiellement à l'axe du moule qui sont destinés à mouler la bande de roulement du pneumatique, et deux coquilles disposées axialement qui sont destinées à mouler les flancs du pneumatique.

Lors de la cuisson, une ébauche de pneumatique à base de gomme de caoutchouc est pressée contre la surface interne de moulage. En même temps, les éléments de moulage sont maintenus en contact les uns contre les autres par des moyens de fermeture afin d'éviter l'ouverture du moule sous l'effet de la pression exercée par l'ébauche de pneumatique contre la surface interne de moulage. Ainsi, lors de la cuisson, le moule reste fermé et la gomme de caoutchouc sous pression ne s'insinue pas entre les éléments de moulage. Toutefois, il peut arriver que certains éléments de moulage soient séparés par un espace très étroit résultant, par exemple, de l'usure des surfaces de contact entre lesdits éléments de moulage, ou d'un choix de conception relatif à la nécessité d'évacuer l'air emprisonné entre l'ébauche de pneumatique et le moule. La gomme de caoutchouc sous pression est alors en mesure de s'insinuer dans ledit espace de manière à former sur le pneumatique une bavure pouvant nuire à ses caractéristiques et à son aspect final.
Les documents WO2017/221283, EP2813354, JPH03279006 et DE102018213083 décrivent un moule pour pneumatique comportant un insert de moulage muni de moyens de découpe d'une partie moulée lors du démoulage.

La demande US2007284783A1 décrit un moule dans lequel chaque secteur comporte, sur ses bords circonférentiels, une surface de contact venant en appui sur la surface de contact du secteur adjacent, et une surface en léger retrait circonférentiellement dite de « non-contact » disposée radialement vers l'intérieur du moule et présentant une rugosité comprise entre 50 et 200 µm. Lors de la cuisson, les surfaces de non-contact de deux secteurs adjacents se rapprochent sous l'effet de leur dilatation thermique de manière à venir en appui l'une contre l'autre. Ainsi, le moule ne permet pas à la gomme de caoutchouc sous pression de s'insinuer entre les secteurs, tout en permettant l'évacuation de l'air grâce à la rugosité des surfaces de non-contact.

Toutefois, l'usure des surfaces de contact entre les secteurs a pour conséquence le rapprochement des surfaces de non-contact et l'augmentation de la pression de contact entre les surfaces de non-contact lorsque celles-ci viennent en contact sous l'effet de la dilatation thermique des secteurs, ladite pression pouvant entrainer une détérioration prématurée de la rugosité des surfaces de non-contact par matage. A l'inverse, lorsque le moule n'est plus capable de compenser le rapprochement des surfaces de contact entre les secteurs du fait de leur usure, on observe la formation d'un espacement entre les surfaces de contact et de non-contact, ledit espacement pouvant entrainer la création d'une bavure.

Un objectif de l'invention est de remédier aux inconvénients de l'état de la technique et d'apporter une solution originale afin d'améliorer les caractéristiques et l'aspect final des pneumatiques, tout en évitant une détérioration prématurée des éléments de moulage.

Cet objectif est atteint par l'invention qui propose, selon un premier objet, un moule de cuisson pour pneumatique comprenant au moins deux éléments de moulage selon la revendication 1, lesdits éléments de moulage étant séparés, en position de fermeture du moule, par un espace créant une bavure lors de la cuisson d'un pneumatique, **caractérisé en ce que** lesdits éléments de moulage comprennent des moyens de découpage aptes à découper ladite bavure lors de l'ouverture du moule.

Autrement dit, il est préférable de maintenir un espace très étroit entre certains éléments de moulage, même en tenant compte de leur dilatation thermique, afin d'éviter la détérioration desdits éléments de moulage.

De plus, lors de l'ouverture du moule, lesdits éléments de moulage s'éloignent du pneumatique selon des trajectoires données. Les moyens de découpage desdits éléments de moulage découpent alors la bavure créée entre les deux éléments de moulage. La bavure est découpée, déchirée, ou fissurée de manière à permettre son élimination lors du roulage du pneumatique qui retrouve alors rapidement des caractéristiques et un aspect satisfaisants.

Avantageusement, chacun desdits éléments de moulage comprend un bord délimitant en partie l'espace qui les sépare en position de fermeture, les moyens de découpage étant agencés sur le bord d'au moins un desdits éléments de moulage de telle manière que les moyens de découpages découpent ladite bavure lors de leur retrait du pneumatique, chacun desdits éléments de moulage étant mobile à retrait lors de l'ouverture du moule. Un tel agencement des moyens de découpage est simple et permet d'obtenir un découpage de la bavure efficace.

De préférence, les moyens de découpage sont agencés sur ledit bord de chacun desdits éléments de moulage, les moyens de découpage de chacun desdits éléments de moulage prenant des formes complémentaires. De telles formes permettent d'améliorer l'efficacité du découpage de la bavure.

Avantageusement, les moyens de découpage sont en venue de matière avec le bord d'au moins un desdits éléments de moulage. Une telle conception est simple et permet un gain de temps lors de la fabrication des éléments de moulage.

De préférence, les moyens de découpage prennent une forme en creux et/ou en protubérance. Une telle forme non-rectiligne permet d'étendre les parties des moyens de découpage en contact avec la bavure et, par conséquent, d'augmenter l'efficacité du découpage de la bavure.

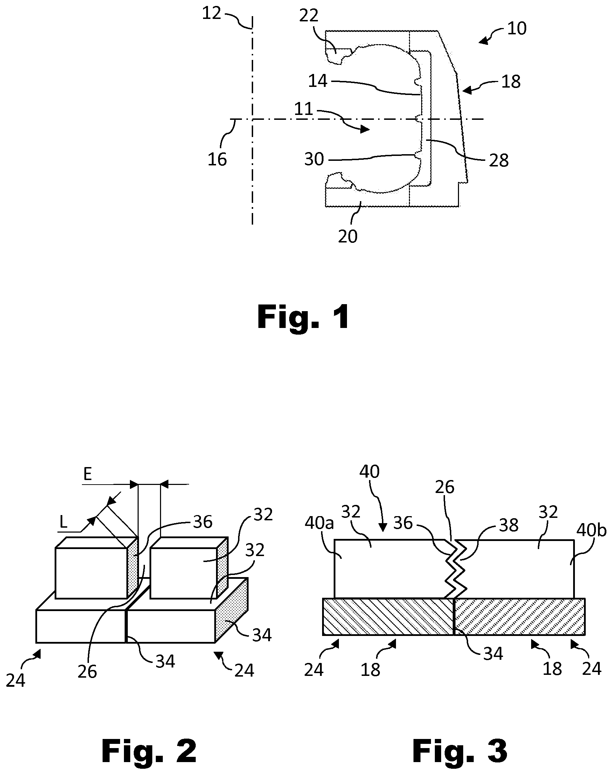

On a illustré à la figure 2 ledit espace 36 qui, avantageusement, présente une longueur L comprise entre 0,2 et 20 mm et, plus préférentiellement, comprise entre 0,5 et 5 mm. De préférence, ledit espace 36 présente une épaisseur E comprise entre 0,1 et 3 mm, plus préférentiellement, comprise entre 0,2 et 2 mm, et encore plus préférentiellement, comprise entre 0,3 et 1 mm.

Un tel espace aux dimensions restreintes implique de disposer d'éléments de moulage de dimensions également restreintes et, par conséquent, fragiles. Un tel dimensionnement des éléments de moulage rend la mise en œuvre de l'invention particulièrement avantageuse.

De préférence, le moule comprend :
- plusieurs secteurs répartis circonférentiellement, destinés à mouler la bande de roulement dudit pneumatique,
- au moins une lamelle destinée à mouler une entaille dans ladite bande roulement, ladite lamelle s'étendant sur deux secteurs adjacents de telle manière que ladite lamelle comprend une partie sur chacun des deux secteurs, lesdits éléments de moulage prenant la forme de chaque partie de la lamelle. La lamelle présente une épaisseur comprise entre 0,2 et 20 mm et, plus préférentiellement, comprise entre 0,5 et 5 mm. De la même façon, un tel arrangement et un tel dimensionnement des éléments de moulage rendent la mise en œuvre de l'invention particulièrement avantageuse.

De préférence, les moyens de découpage prennent la forme d'une denture triangulaire ou crénelée. Une telle forme permet d'améliorer l'efficacité du découpage de la bavure.

Avantageusement, les moyens de découpage sont obtenus à l'aide d'un procédé de consolidation par fusion sélective. L'utilisation d'un tel procédé, également employé dans la fabrication des éléments de moulage sur lesquels les moyens de découpage sont agencés, permet de réduire le coût et la durée de fabrication des moyens de découpage.

L'invention a pour deuxième objet un procédé de fabrication d'un pneumatique comprenant une étape de cuisson d'un pneumatique dans un moule de cuisson selon le premier objet de l'invention.

L'invention sera mieux comprise grâce à la suite de la description, qui s'appuie sur les figures suivantes :
- la figure 1 est une représentation schématique d'un moule de cuisson selon l'état de la technique ;
- la figure 2, déjà décrite, est une représentation schématique de certains éléments du moule de la figure 1 ;
- la figure 3 est une représentation schématique de certains éléments d'un moule de cuisson selon un mode préféré de réalisation de l'invention ;

Sur les différentes figures, les éléments identiques ou similaires portent la même référence. Leur description n'est donc pas systématiquement reprise.

On a illustré à la figure 1 une représentation schématique d'un moule de cuisson 10 servant à mouler et à cuire une ébauche de pneumatique, en vue d'obtenir un pneumatique de caractéristiques et d'aspect voulus. Le moule délimite une cavité 11 généralement symétrique par révolution d'axe central 12. Le moule comprend un bâti, des éléments de moulage, des moyens de cuisson, et des moyens d'ouverture et de fermeture du moule. Les moyens d'ouverture et de fermeture sont aptes à mettre en mouvement les éléments de moulage entre une position d'ouverture et une position de fermeture. La position d'ouverture correspond à l'étape d'extraction d'un pneumatique moulé et vulcanisé, ainsi qu'à l'étape d'introduction d'une nouvelle ébauche de pneumatique. La position de fermeture (figure 1) correspond à l'étape de moulage et de cuisson de l'ébauche de pneumatique. En position de fermeture du moule, les éléments de moulage forment une surface interne de moulage 14 correspondant en négatif à la surface externe souhaitée du pneumatique. Les moyens de cuisson sont aptes à fournir l'énergie thermique et/ou la pression nécessaires, respectivement, à la cuisson et/ou au pressage de l'ébauche de pneumatique contre la surface interne de moulage 14. A titre d'exemple, l'apport en énergie thermique et en pression est assuré par de la vapeur d'eau sous pression circulant autour du moule, et à l'intérieur de l'ébauche de pneumatique dans une membrane extensible.

Dans toute la suite et sauf indication contraire, une direction axiale désigne une direction parallèle à l'axe central 12, une direction radiale 16 désigne une direction perpendiculaire à l'axe central 12 et qui l'intercepte, et une direction circonférentielle désigne une direction perpendiculaire à une direction radiale 16 et à l'axe central 12.

Le moule 10 comprend plus particulièrement plusieurs secteurs 18 destinés à mouler la bande de roulement du pneumatique, deux coquilles 20 destinées à mouler les flancs du pneumatique, et deux anneaux 22 destinés à mouler les bourrelets du pneumatique. En position de fermeture du moule, les secteurs 18 sont répartis circonférentiellement à l'axe central 12 du moule de manière à former un anneau, et sont mobiles à retrait radial par rapport au pneumatique lors de l'ouverture du moule.

On a illustré à la figure 2 certains éléments du moule 10 qui comprend au moins deux éléments de moulage adjacents 24, lesdits éléments de moulage étant séparés, en position de fermeture du moule, par un espace 26 créant une bavure (non représentée) lors de la cuisson d'un pneumatique. A titre d'exemple, les deux éléments de moulage 26 peuvent être deux secteurs 18, un secteur 18 et une coquille 20, ou deux éléments entrant dans la composition d'un ou plusieurs secteurs tels des éléments de garniture 28, des lames 30 destinées à mouler des sillons dans la bande de roulement du pneumatique, ou des lamelles destinées à mouler des entailles dans ladite bande de roulement. Chacun desdits éléments de moulage 24 comprend une pluralité de faces aux fonctionnalités variées. Notamment, un élément de moulage comprend une surface de moulage 32 contribuant à la surface interne de moulage 14 du moule, plusieurs surfaces de contact 34 ou interfaces avec des éléments de moulage adjacents et au moins un bord 36 délimitant en partie l'espace 26 créant la bavure. A titre d'exemple, la présence dudit espace 26 est le fait d'un choix de conception visant à éviter les chocs entre des parties fragiles des deux éléments de moulage 24, lesdits éléments de moulage venant en contact durement par leurs surfaces de contact 34 lors de la fermeture du moule.

La figure 3 illustre lesdits éléments de moulage 24 qui comprennent, selon l'invention, des moyens de découpage 38 aptes à découper ladite bavure lors de l'ouverture du moule. Lors de l'ouverture du moule, lesdits éléments de moulage s'éloignent du pneumatique selon des trajectoires données. Les moyens de découpage desdits éléments de moulage découpent alors la bavure créée entre les deux éléments de moulage. Les moyens de découpage sont agencés sur le bord 36 d'au moins un desdits éléments de moulage 24 de telle manière que ladite bavure coulisse le long des moyens de découpage lors de leur retrait.

Les moyens de découpage prennent une forme en creux et/ou en protubérance. Les creux et les protubérances des moyens de découpage permettent d'allonger le cheminement de coulissement de la bavure le long des moyens de découpage lors de leur retrait. A titre d'exemples, les moyens de découpage prennent la forme de ciseaux, de lames, de pointes ou de toute forme adaptée pour découper, déchirer ou former une amorce de rupture dans la bavure.

De préférence, les moyens de découpage sont agencés sur le bord 36 de chacun desdits éléments de moulage 24, les moyens de découpage de chacun desdits éléments de moulage prenant des formes complémentaires. Ainsi, l'efficacité du découpage de la bavure par les moyens de découpage est améliorée. Les moyens de découpage 38 sont en venue de matière avec le bord 36 d'au moins un desdits éléments de moulage 24. A titre d'exemple, les moyens de découpage peuvent également être fixé sur les bords 36 des éléments de moulage 24 par tout autre moyen adapté.

Ledit espace 26 présente une longueur L comprise entre 0,2 et 20 mm et, plus préférentiellement, comprise entre 0,5 et 5 mm. La longueur dudit espace désigne, dans un plan circonférentiel, la plus longue distance le long de laquelle les deux éléments de moulage sont bord à bord. Ainsi, il est particulièrement pertinent de prévoir un espace 26 et des moyens de découpage 38 sur les bords d'éléments moulants 24 dont la surface de contact est peu étendue et, par conséquent, plus fragile.

Ledit espace présente une épaisseur E comprise entre 0,1 et 3 mm, plus préférentiellement, comprise entre 0,2 et 2 mm, et encore plus préférentiellement, comprise entre 0,3 et 1 mm. L'épaisseur dudit espace désigne, dans un plan circonférentiel, la plus courte distance séparant les deux éléments de moulage. Il est nécessaire que les éléments de moulage soient suffisamment distants afin de prévenir tout risque de choc entre eux et suffisamment proches afin de minimiser l'épaisseur de la bavure, et ainsi faciliter son découpage.

Selon un mode préféré de réalisation, le moule comprend au moins une lamelle 40 s'étendant sur deux secteurs 18 adjacents de telle manière que ladite lamelle comprend une partie sur chacun des deux secteurs. Autrement dit, ladite lamelle comprend deux parties 40a, 40b, lesdits éléments de moulage 24 prenant la forme de chaque partie de la lamelle et, éventuellement, du secteur 18 sur lequel une partie de lamelle est assemblée. Il est particulièrement pertinent de prévoir un espace 26 et des moyens de découpage 38 sur les bords particulièrement fragile d'une lamelle « sectorisée ». La lamelle présente une épaisseur comprise entre 0,2 et 20 mm et, plus préférentiellement, comprise entre 0,5 et 5 mm.

De préférence, les moyens de découpage prennent la forme d'une denture triangulaire ou crénelée. Une telle forme est particulièrement facile à agencer sur le bord 36 d'une lamelle 40.

Les différents éléments de moulage 24 et les moyens de découpage 38 entrant dans la composition du moule 10 sont réalisés dans des alliages d'acier, d'aluminium, en résine polymère ou autre matériau rigide adapté à une telle utilisation.

Les différents éléments de moulage 24 et les moyens de découpage 38 sont obtenus à l'aide d'un procédé choisi parmi le groupe de procédé suivant : la fonderie, l'emboutissage, le découpage laser, le taillage laser, l'électroérosion ou la consolidation par fusion sélective.

Par « consolidation sélective par fusion », on entend un procédé de fabrication additive visant à agréger ou agglomérer progressivement et sélectivement, une amenée de matière d'œuvre entrante de manière à obtenir une matière d'œuvre sortante. La matière d'œuvre entrante prend la forme et/ou rentre dans la composition d'une poudre, d'un fil ou d'une solution/bain. La matière d'œuvre entrante est généralement amenée par dépôt d'une poudre sur un support de manière à former une couche. Le support prend la forme d'un plateau ou d'une couche précédemment agglomérée. L'agglomération est généralement obtenue par solidification de la matière d'œuvre entrante qui est entrée en fusion totale ou partielle (frittage) par un apport localisé ou généralisé d'énergie, puis refroidie. L'apport d'énergie est généralement réalisé par un laser ou par un faisceau d'électrons, bien qu'il puisse être réalisé par induction ou rayonnement infrarouge. Dans le cas du laser et du faisceau d'électrons, la localisation de l'apport d'énergie est obtenue par des moyens d'orientation de l'apport d'énergie comme, respectivement, des moyens optiques ou électromagnétiques. Le procédé confère à la matière d'œuvre entrante une forme et des caractéristiques mécaniques prédéterminées. Ladite forme et lesdites caractéristiques sont fonctions du matériau de la matière d'œuvre entrante et de paramètres du procédé. Ladite forme est généralement un solide monobloc, bien qu'elle puisse être constituée de plusieurs solides monoblocs.

D'autres variantes et modes de réalisation de l'invention peuvent être envisagés sans sortir du cadre de ces revendications.

## Revendications

1. Moule de cuisson (10) pour pneumatique comprenant :
- plusieurs secteurs (18) répartis circonférentiellement, destinés à mouler la bande de roulement dudit pneumatique,
- au moins une lamelle (40) destinée à mouler une entaille dans ladite bande roulement, ladite lamelle s'étend sur deux secteurs (18) adjacents de telle manière que ladite lamelle comprend une partie (40a, 40b) sur chacun des deux secteurs,
les deux parties de la lamelle étant séparées, en position de fermeture du moule, par un espace (26) réalisé de manière à entraîner la création d'une bavure lors de la cuisson d'un pneumatique,
lesdites parties de la lamelle comprenant des moyens de découpage (38) aptes à découper ladite bavure lors de l'ouverture du moule.

2. Moule selon la revendication précédente, dans lequel chacune desdites parties de la lamelle (24) comprend un bord (36) délimitant en partie ledit espace (26), les moyens de découpage (38) étant agencés sur le bord d'au moins une desdites parties de la lamelle de telle manière que les moyens de découpages (38) découpent ladite bavure lors de leur retrait du pneumatique, chacune desdites parties de la lamelle (24) étant mobile à retrait lors de l'ouverture du moule.

3. Moule selon la revendication précédente, dans lequel les moyens de découpage (38) sont agencés sur le bord (36) de chacune desdites parties de la lamelle, les moyens de découpage de chacune desdites parties de la lamelle (24) prenant des formes complémentaires.

4. Moule selon l'une des revendications 2 à 3, dans lequel les moyens de découpage (38) sont venus de matière avec le bord (36) d'au moins une desdites parties de la lamelle (24).

5. Moule selon l'une des revendications précédentes, dans lequel les moyens de découpage (38) prennent une forme en creux et/ou en protubérance.

6. Moule selon l'une des revendications précédentes, dans lequel ledit espace (26) présente une longueur (L) comprise entre 0,2 et 20 mm et, plus préférentiellement, comprise entre 0,5 et 5 mm.

7. Moule selon l'une des revendications précédentes, dans lequel ledit espace (26) présente une épaisseur (E) comprise entre 0,1 et 3 mm, plus préférentiellement, comprise entre 0,2 et 2 mm, et encore plus préférentiellement, comprise entre 0,3 et 1 mm.

8. Moule selon l'une des revendications précédentes, dans lequel la lamelle (40) présente une épaisseur comprise entre 0,2 et 20 mm et, plus préférentiellement, comprise entre 0,5 et 5 mm.

9. Moule selon l'une des revendications précédentes, dans lequel les moyens de découpage (38) prennent la forme d'une denture triangulaire ou crénelée.

10. Moule selon l'une des revendications précédentes, dans lequel les moyens de découpage (38) sont obtenus à l'aide d'un procédé de consolidation par fusion sélective.

11. Procédé de fabrication d'un pneumatique comprenant une étape de cuisson d'un pneumatique dans un moule (10) selon l'une des revendications 1 à 10.

## Patentansprüche

1. Vulkanisationsform (10) für einen Reifen, umfassend:
- mehrere umfänglich verteilte Sektoren (18), die dazu bestimmt sind, den Laufstreifen des Reifens zu formen,
- mindestens eine Lamelle (40), die dazu bestimmt ist, einen Einschnitt in dem Laufstreifen zu formen, wobei sich die Lamelle über zwei benachbarte Sektoren (18) erstreckt, so dass die Lamelle einen Teil (40a, 40b) auf jedem der beiden Sektoren umfasst,
wobei die beiden Teile der Lamelle, in der Schließposition der Form, durch einen Raum (26) getrennt werden, der so ausgeführt ist, dass er beim Vulkanisieren eines Reifens zum Entstehen eines Grats führt,
wobei die Teile der Lamelle Schneidmittel (38) umfassen, die geeignet sind, den Grat beim Öffnen der Form abzuschneiden.

2. Form nach dem vorhergehenden Anspruch, wobei jeder der Teile der Lamelle (24) einen Rand (36) umfasst, der den Raum (26) zum Teil begrenzt, wobei die Schneidmittel (38) an dem Rand mindestens eines der Teile der Lamelle so angeordnet sind, dass die Schneidmittel (38) den Grad bei ihrem Herausziehen aus dem Reifen abschneiden, wobei jeder der Teile der Lamelle (24) beim Öffnen der Form herausgezogen wird.

3. Form nach dem vorhergehenden Anspruch, wobei die Schneidmittel (38) an dem Rand (36) jedes der Teile der Lamelle angeordnet sind, wobei die Schneidmittel jedes der Teile der Lamelle (24) komplementäre Formen annehmen.

4. Form nach einem der Ansprüche 2 bis 3, wobei die Schneidmittel (38) materialeinheitlich mit dem Rand (36) mindestens eines der Teile der Lamelle (24) sind.

5. Form nach einem der vorhergehenden Ansprüche, wobei die Schneidmittel (38) eine vertiefte und/oder erhabene Form annehmen.

6. Form nach einem der vorhergehenden Ansprüche, wobei der Raum (26) eine Länge (L) zwischen 0,2 und 20 mm und noch bevorzugter zwischen 0,5 und 5 mm aufweist.

7. Form nach einem der vorhergehenden Ansprüche, wobei der Raum (26) eine Dicke (E) zwischen 0,1 und 3 mm, noch bevorzugter zwischen 0,2 und 2 mm und noch stärker bevorzugt zwischen 0,3 und 1 mm aufweist.

8. Form nach einem der vorhergehenden Ansprüche, wobei die Lamelle (40) eine Dicke zwischen 0,2 und 20 mm und noch bevorzugter zwischen 0,5 und 5 mm aufweist.

9. Form nach einem der vorhergehenden Ansprüche, wobei die Schneidmittel (38) die Form einer dreieckigen oder zinnenartigen Zahnung annehmen.

10. Form nach einem der vorhergehenden Ansprüche, wobei die Schneidmittel (38) mithilfe eines Verfahrens zur Verfestigung durch selektives Schmelzen erhalten werden.

11. Verfahren zur Herstellung eines Reifens, umfassend einen Schritt des Vulkanisierens eines Reifens in einer Form (10) nach einem der Ansprüche 1 bis 10.

## Claims

1. Mould (10) for curing a tyre, comprising:
- a plurality of circumferentially distributed sectors (18) that are intended to mould the tread of said tyre,
- at least one sipe blade (40) intended to mould a void in said tread, said sipe blade extending over two adjacent sectors (18) such that said sipe blade comprises a part (40a, 40b) in each of the two sectors,
the two parts of the sipe blade being separated, in the closed position of the mould, by a space (26) made in such a way as to cause the creation of a flash during the curing of a tyre,
said parts of the sipe blade comprising cutting means (38) that are able to cut off said flash during the opening of the mould.

2. Mould according to the preceding claim, wherein each of said parts of the sipe blade (24) comprises an edge (36) partially delimiting said space (26), the cutting means (38) being arranged on the edge of at least one of said parts of the sipe blade such that the cutting means (38) cut off said flash during their withdrawal from the tyre, each of said parts of the sipe blade (24) being able to be withdrawn during the opening of the mould.

3. Mould according to the preceding claim, wherein the cutting means (38) are arranged on the edge (36) of each of said parts of the sipe blade, the cutting means of each of said parts of the sipe blade (24) having complementary shapes.

4. Mould according to either of Claims 2 and 3, wherein the cutting means (38) are integral with the edge (36) of at least one of said parts of the sipe blade (24).

5. Mould according to one of the preceding claims, wherein the cutting means (38) have a recessed and/or protruding shape.

6. Mould according to one of the preceding claims, wherein said space (26) has a length (L) of between 0.2 and 20 mm, and more preferably between 0.5 and 5 mm.

7. Mould according to one of the preceding claims, wherein said space (26) has a thickness (E) of between 0.1 and 3 mm, more preferably between 0.2 and 2 mm, and even more preferably between 0.3 and 1 mm.

8. Mould according to one of the preceding claims, wherein the sipe blade (40) has a thickness of between 0.2 and 20 mm, and more preferably between 0.5 and 5 mm.

9. Mould according to one of the preceding claims, wherein the cutting means (38) have the shape of a triangular or crenellated toothing.

10. Mould according to one of the preceding claims, wherein the cutting means (38) are obtained by way of a process of consolidation by selective melting.

11. Method for manufacturing a tyre, comprising a step of curing a tyre in a mould (10) according to one of Claims 1 to 10.
